# EUROPÄISCHE PATENTSCHRIFT

(11) **EP 2 694 789 B1**
(45) Veröffentlichungstag und Bekanntmachung des Hinweises auf die Patenterteilung: **25.04.2018**
(21) Anmeldenummer: 12721729.7
(22) Anmeldetag: 28.03.2012
(51) Int. Cl.: F22B 1/00, F02C 6/18, F02C 1/05, F02C 1/06, F01K 3/18, F01K 21/04, F02C 1/00

(54) **ANLAGE UND VERFAHREN ZUR ERZEUGUNG VON HEISSWASSER UND/ODER DAMPF UND FÜR DIE SPEICHERUNG VON WASSER IN FLÜSSIGER UND/ODER GASFÖRMIGER FORM ZUM EINSATZ FÜR EIN GASTURBINENKRAFTWERK**
SYSTEM AND METHOD FOR PRODUCING HOT WATER AND/OR STEAM AND FOR STORING WATER IN LIQUID AND/OR GASEOUS FORM FOR USE FOR A GAS TURBINE POWER PLANT
INSTALLATION ET PROCÉDÉ DE PRODUCTION D'EAU CHAUDE ET/OU DE VAPEUR ET DE STOCKAGE D'EAU SOUS FORME LIQUIDE ET/OU GAZEUSE, DESTINÉE À ÊTRE UTILISÉE DANS UNE CENTRALE À TURBINES À GAZ

(30) Priorität: 04.04.2011 DE 102011001766
(43) Veröffentlichungstag der Anmeldung: 12.02.2014
(73) Patentinhaber: Technische Universität Chemnitz, 09111 Chemnitz (DE)
(72) Erfinder: URBANECK, Thorsten, 09125 Chemnitz (DE); PLATZER, Bernd, 09235 Burkhardtsdorf/Neuei. (DE)
(74) Vertreter: Rumrich, Gabriele
(86) Internationale Anmeldenummer: PCT/DE2012/100080
(87) Internationale Veröffentlichungsnummer: WO 2012/136201

(56) Entgegenhaltungen:
- EP-A1- 1 355 109
- DE-A1- 10 124 492
- DE-A1- 19 918 346
- US-A1- 2003 226 348

## Beschreibung

Die Erfindung betrifft eine Anlage und ein Verfahren zur Erzeugung von Heißwasser und/oder Dampf und für die Speicherung von Wasser in flüssiger und/oder gasförmiger Form zum Einsatz für ein Gasturbinenkraftwerk.

Gasturbinen-Kraftwerke können zur alleinigen Stromerzeugung oder zur gleichzeitigen Bereitstellung von Strom und Wärme (KWK... Kraft-Wärme-Kopplung) herangezogen werden. Folgende Maßnahmen sind dabei zur energetischen Verbesserung des offenen Gasturbinenprozesses (höhere Ausnutzung des Brennstoffs) bekannt:
- eine Vorwärmung der komprimierten Luft - stationäre Vorwärmung des Wassers,
- eine Wasser-/Dampfeinspritzung - z.B. STIG. .. Steam-Injected Gas Turbine, HAT-Prozess (Humid air Turbine) usw.,
- eine mehrstufige Ausführung usw.

Mit einer Nachschaltung eines geschlossenen Dampfkreisprozesses kann man das Kraftwerk zum kombinierten Gas- und Dampfkraftwerk (GuD) erweitern. Weiterhin ist die Luftvorwärmung für Kohlekraftwerke bekannt.
Bei der Kraft-Wärme-Kopplung wird der Abgasstrom zu Heizzwecken genutzt:
- Nachschaltung eines technologischen Prozesses (z. B. Kohletrocknung),
- Wärmeauskopplung für Heizzwecke (z. B. Fernwärme),
- Industriekraftwerke mit Prozesswärmesystem usw.

Es ist eine bedarfsgerechte Bereitstellung von Strom und Wärme möglich, denn der Prozess ist schnell regelbar. Es bestehen damit besonders gute Voraussetzungen zur Bereitstellung von Regelenergie.

Zur Prozessoptimierung mittels Speichertechnik wurde bisher nur Luft als Speichermedium diskutiert und umgesetzt. Nachteilig ist bei der Verwendung von unterirdischen Druckluft-Kavernenspeichern, dass diese eine bestimmte Geologie erfordern und nur im großtechnischen Maßstab bei langen Bauzeiten umsetzbar sind. Es sind weiterhin thermische Verluste zu verzeichnen.

Die bisher ebenfalls verwendeten Druckluft-Behälterspeicher weisen eine niedrige Energiedichte auf und der maximale Druck wird durch die realisierbare Behälterwandstärke begrenzt.
Die Bereitstellung von Regelleistung/-energie gewinnt zunehmend an Bedeutung. Dies ist auf den massiven Ausbau regenerativer Energien in Form von Wind- und Fotovoltaikstrom zurückzuführen. Diese Entwicklung erfordert gleichzeitig eine schnelle Leistungsanpassung der Regelleistung seitens der Wärmekraftwerke, was heute nur bedingt möglich ist. Hier könnten mittelgroße Anlagen mit schnell regelbarer Leistung und Kraft-Wärme-Kopplung aufgrund eines effizienteren Gesamtbetriebs eine Schlüsselrolle im Vergleich zu Großkraftwerken und kleinteiligen Ansätzen (z. B. virtuelle Kraftwerke) einnehmen. Entsprechende Änderungen im Handel (z. B. Strombörse) begünstigen derartige Entwicklungen.

Aus der Druckschrift DE 102008 051 384 B3 ist bereits ein solarhybridbetriebenes Gas- und Dampfkraftwerk mit einer Solaranlage, einer Gasturbinenanlage und einer Dampfturbinenanlage bekannt, wobei die Solaranlage einen Receiver, die Gasturbinenanlage eine Gasturbine mit einem nachgeschalteten Abhitzekessel und die Dampfturbinenanlage eine Dampfturbine mit einem Speisewasservorwärmer aufweist. Zusätzlich ist ein Wärmeträgerkreislauf zum Übertragen solarer Wärme vorgesehen, wobei der Wärmeträgerkreislauf über einen Gasturbinenwärmeübertrager mit der Gasturbinenanlage und über einen Solarkessel mit der Dampfturbinenanlage gekoppelt ist. Alternativ zur Gasturbinenanlage und Dampfturbinenanlage weist das solarhybridbetriebene Gas- und Dampfkraftwerk eine integrierte Gas-Dampf-Turbine mit einem nachgeschalteten Abhitzekessel auf, wobei der Wärmeträgerkreislauf über den Gasturbinenwärmeübertrager und über den Solarkessel mit der integrierten Gas-Dampf-Turbine gekoppelt ist. Das heiße Abgas der Gasturbine wird im Abhitzekessel zur Erzeugung von überhitztem Dampf genutzt. Parallel dazu kann der Dampf auch im Solarkessel bereitgestellt werden. Dem im Verdampfer bei Sättigungstemperatur verdampften Wasser wird im Überhitzer weitere Wärme zugeführt. Durch das weitere Erwärmen des Dampfes nehmen die Temperatur und das spezifische Volumen des Dampfes zu, er wird dabei überhitzt. Vom Solarkessel und vom Abhitzekessel strömt der Dampf über Rohrleitungen in die Dampfturbine, in der die Fluidmenge des Dampfes infolge der Abgabe technischer Arbeit abnimmt. Die Dampfmassenströme aus Solarkessel und Abhitzekessel werden vor dem Eintritt in die Dampfturbine gemischt. Ebenso wie die Gasturbine ist die Dampfturbine mit einem Generator gekoppelt, der die mechanische Leistung in elektrische Leistung umwandelt.

Danach strömt der entspannte und abgekühlte Dampf in den Dampfturbinenkondensator, in dem er durch Wärmeübertragung an die Umgebung kondensiert. Das kondensierte Wasser wird durch eine Kondensatpumpe und anschließend durch den Speisewasservorwärmer im Abhitzekessel der Gasturbine geleitet und dabei vorgewärmt. Zudem wird die Temperatur des Abgases der Gasturbine verringert. Damit wird vorteilhafterweise der Wirkungsgrad der Anlage erhöht. Das erwärmte Speisewasser gelangt zur Zwischenspeicherung zum Speisewasserbehälter. Nachfolgend wird das Wasser über Speisepumpen aus dem Speisewasserbehälter erneut dem Solarkessel und dem Abhitzekessel zugeführt, so dass ein geschlossener Kreislauf gebildet wird.

In der Druckschrift US 208/0127647 A1 wird ein Dampfturbinenkraftwerk beschrieben, bei welchem zur Erzeugung von Heißwasser und/oder Dampf ähnlich wie in der vorgenannten Schrift DE 102008 051 384 B3 eine Solaranlage eingesetzt wird, die einen Speicherbehälter zur Speicherung und Erwärmung von Wasser aufweist. Der damit erzeugte Dampf wird auch in einem geschlossenen Kreislauf zum Antrieb der Dampfturbine eingesetzt. Dies erfolgt in Kombination mit einer Gasturbine, deren Abgase ebenfalls zum Antrieb der Dampfturbine verwendet werden.

In der Druckschrift DE 20 2008 002 599 U1 wird ebenfalls kein Gasturbinenkraftwerk sondern eine Kombination von Dampfturbine und Solaranlage zur Dampferzeugung beschrieben.

Die Arbeitsweise einer Dampfturbine mit einem geschlossenen Prozess ist dabei sehr unterschiedlich zu einer Gasturbine, die mit einem offenen Prozess arbeitet. Nachteilig sind bei den vorgenannten Lösungen die aufwendige und komplexe Prozessführung und die begrenzte Leistungsänderungsgeschwindigkeit.

Aufgabe der Erfindung ist es, eine Anlage und ein Verfahren zur Erzeugung von Heißwasser und/oder Dampf und für die Speicherung von Wasser in flüssiger und/oder gasförmiger Form zum Einsatz für ein Gasturbinenkraftwerk zu entwickeln, welche auch bei Nichtbetreiben der Gasturbinenanlage ein gefordertes Temperaturniveau des Wassers gewährleistet, so dass das Wasser oder der daraus erzeugte Dampf bei einem Start/Neustart mit geeigneten Prozessparametern bereitgestellt wird.

Diese Aufgabe wird durch die Merkmale des ersten und neunten Patentanspruchs gelöst.
Vorteilhafte Ausgestaltungen ergeben sich aus den Unteransprüchen.

Die Anlage zur Erzeugung von Heißwasser und/oder Dampf für ein Gasturbinenkraftwerk verwendet erfindungsgemäß zur Erwärmung des Wassers und damit zur Erzeugung des Heißwassers und/oder Dampfes die dafür benötigte Energie aus wenigstens einer externen Energiequelle, die mit der Anlage gekoppelt und außerhalb des Gasturbinenkraftwerkes und/oder der Anlage zur Erzeugung des Heißwasser und/oder Dampfes angeordnet ist.

Die für die Erwärmung des Wassers erforderliche Energie wird dabei vorteilhafter Weise aus negativer Regelleistung oder auch aus Stromüberschüssen Energiequellen bereitgestellt.

Die Erwärmung des Wassers kann innerhalb oder außerhalb des jeweiligen Speicherbehälters erfolgen. Bevorzugt wird das Heißwasser und/oder der Dampf in wenigstens einem Speichersystem gespeichert, welches zumindest einen Speicherbehälter aufweist, in dem vorteilhafter Weise die Speicherung des Wassers in unterschiedlichen Zuständen realisiert wird und in dem auch das Wasser erwärmt wird, wofür die Energie aus der wenigstens einen externen Energiequelle bereitgestellt wird.

Bevorzugt übernimmt wenigstens ein System eine Wasservorwärmung, die innerhalb oder außerhalb eines ersten Speichersystems realisiert werden kann und es wird wenigstens ein zweites Speichersystem vorgesehen, welches eine Wassernachwärmung übernimmt und wobei dem ersten Speichersystem und/oder dem zweiten Speichersystem die Wärmeenergie aus der Abwärme des Gasturbinenkraftwerkes zuführbar ist und dass zusätzlich dem ersten Speichersystem und/oder dem zweiten Speichersystem Energie aus der wenigstens einen externen Energiequelle zur Erzeugung von Heißwasser und/oder Dampf bereitgestellt wird.

Als externe Energiequelle kann beispielsweise eine der nachfolgend aufgeführten externen Energiequellen einzeln oder in Kombinationen verwendet werden:
- wenigstens eine Einrichtung zur Umwandlung von Elektroenergie in thermische Energie,
- wenigstens eine regenerative Energiequelle (Solaranlagen, z.B. Niedertemperatur- und Hochtemperatur-Solarthermie),
- eine oder mehrere Abwärmequellen mit niedrigen und/oder hohen Temperaturen, z.B. in Form von Abgasströmen, Abwärme aus industriellen Prozessen.

Alternativ sind auch andere externe Energiequellen möglich, auf die hier nicht näher eingegangen wird.

Bevorzugt wird dabei negative Regelleistung bereitgestellt.

Derartige negative Regelleistungen werden nun erstmalig für die erfindungsgemäße Lösung zur Bereitstellung der erforderlichen Energieabnahme für die Erwärmung des Wassers verwendet.

Die Elektroenergie zur Speicherbeladung kann auch aus Stromüberschüssen bereitgestellt werden.

Es ist damit möglich, das Wasser z.B. mittels elektrischer Energie zu erwärmen und in den Speicherbehältern zu speichern, um diese Energie im Bedarfsfall dem Gasturbinenkraftwerk zur Verfügung zu stellen.

Werden zwei Speichersysteme verwendet, so ist der erste Speicherbehälter, der dem ersten Speichersystem zugeordnet ist, bevorzugt als Niedertemperaturspeicher ausgebildet, wobei die Einkopplung der Energie bei Temperaturen bis 95 °C erfolgt und der erste Speicherbehälter auf einen Druck in der Größenordnung von 2 bis 10 bar ausgelegt ist.

Der zweite Speicherbehälter, der dem zweiten Speichersystem zugeordnet ist, wird bevorzugt als Hochtemperaturspeicher ausgebildet, in welchen die Einkopplung der Energie bei Temperaturen größer 95 °C erfolgt, womit Heißwasser und/oder Dampf erzeugt wird. Der Hochtemperaturspeicherbehälter ist insbesondere auf einen Druck in der Größenordnung von 10 bis 20 bar oder höher ausgelegt.

Nach dem erfindungsgemäßen Verfahren zur Erzeugung von Heißwasser und/oder Dampf und für die Speicherung von Wasser in flüssiger und/oder gasförmiger Form zum Einsatz für ein Gasturbinenkraftwerk mit einem Verdichter und einer Turbine unter Verwendung einer Anlage zur Erzeugung von Heißwasser und/oder Dampf mit wenigstens einem Speichersystem mit zumindest einem Speicherbehälter für die Speicherung des Wassers, in welchem durch die Zufuhr von Energie das Wasser erwärmt wird, erfolgt die Bereitstellung der Energie aus wenigstens einer externen Energiequelle die außerhalb des Gasturbinenkraftwerkes und/oder der Anlage angeordnet ist es wird erstmalig in einem offenen Prozess das damit erzeugte und bereitgestellte Heißwasser und/oder der Dampf in einen Fluidstrom zwischen Verdichter und Turbine und/oder in die Turbine des Gasturbinenkraftwerkes eingespritzt, wodurch eine erhebliche Leistungssteigerung des Gasturbinenkraftwerkes zu verzeichnen ist.

Dazu wird in der Anlage das Wasser bei einem Druck über dem Niveau des Umgebungsdruckes in zwei Speichersystemen gespeichert, wobei in einem ersten Speicherbehälter ein Druck über dem Umgebungsdruck von 2-10 bar herrscht und alle Energien bis 95°C eingekoppelt werden, so dass eine Temperatur des Wassers bis 95°C erzielt wird und dass in einem zweiten Speicherbehälter alle Energien über 95°C eingebracht werden und das Wasser auf eine Temperatur über 95°C bei einem Druck in der Größenordnung von 10 bar oder höher erwärmt wird, so dass es zumindest teilweise in die Dampfphase übergeht.

Der damit aus dem zweiten Speicherbehälter bereitgestellter Wasserdampf wird verfahrensgemäß unter Druck an einer oder mehreren der nachfolgend aufgeführten Positionen des Gasturbinenkraftwerkes zu verdichteter Luft oder einem Luft-/ Brennstoffgemisch oder Rauchgas eingespritzt:
- (a1) - zwischen dem Verdichter (1.2) und einem ersten Wärmeübertrager (1.3),
- (a2) - zwischen dem ersten Wärmeübertrager (1.3) und einer Brennkammer (1.4),
- (a3) - zwischen der Brennkammer (1.4) und der Turbine (1.5),
- (a4) - direkt in die Turbine (1.5).

Dazu wird der im zweiten Speicherbehälter bereitgestellte Wasserdampf unter Druck durch Öffnen eines Motorventils an den vorgenannten Positionen eingespritzt wird, wobei der Wasserverlust, der durch das Einspritzen von Wasserdampf aus dem zweiten Speicherbehälter (2.2) in das Gasturbinenkraftwerk (1) in dem offenen Prozess zu verzeichnen ist, durch eine Wassernachspeisung im Niedertemperatur-Speicher in Form des ersten Speicherbehälters über einen Wasseranschluss ausgeglichen wird. Mit der erfindungsgemäßen Anlage, die unter Verwendung des mittels externer Energiequellen erwärmten und gespeicherten Wassers zeitverzögert zur Zuführung der externen Energie betrieben wird, ist erstmalig der Energieeintrag durch die externen Energiequellen von der Energieentnahme (Speicherentladung) aus dem ersten und/oder zweiten Speicherbehälter entkoppelt. Dadurch kann die in der Anlage gespeicherte Energie schnell und effizient zum Betreiben des Gasturbinenkraftwerkes in Spitzenlastzeiten zur Verfügung gestellt werden. Dies erfolgt erstmalig dadurch, dass gespeichertes Heißwasser und/oder Dampf zur Einspritzung in einen Fluidstrom zwischen dem Verdichter und der Turbine des Gasturbinenkraftwerkes verwendet wird, wodurch der Wirkungsgrad bzw. die Leistung des Gasturbinenkraftwerkes erheblich gesteigert werden kann. Weiterhin ist es möglich, den Dampf aus dem Speichersystem zur Unterstützung des Anfahrens der Turbine des Gasturbinenkraftwerkes zu verwenden.

Die Einspritzung des Heißwassers bzw. Dampfes in den Fluidstrom bzw. das Brennstoffgemisch oder Rauchgas zwischen Verdichter und Turbine bzw. in die Turbine erfordert einen offenen Kreislauf/Prozess, so dass Wasser in diesem Kreislauf, d.h. den ersten Speicherbehälter nachgespeist werden muss.

Mit der erfindungsgemäßen Lösung zur Strom- und/oder Wärmeerzeugung in einem Gasturbinenprozess mit Dampf-/Wassereinspritzung (STIG oder HAT) und in den nachgeschalteten Prozessen (z. B. Wärmeauskopplung) kann eine erhebliche temporäre Leistungssteigerung der Turbinenanlage (z. B. positive Regelleistung) bzw. eine schnelle Leistungsanpassung und eine effiziente Prozessgestaltung zur hohen Energie-/Brennstoffausnutzung realisiert werden. Weitere Vorteile sind die sich durch die Wasser- oder Dampfeinspritzung verringernde Temperatur der Turbine und die niedrigeren Emissionswerte. Die Einkopplung externer Energiequellen ggf. in Kombination mit internen Energiequellen des Gasturbinenkraftwerkes ermöglicht eine überraschende Erhöhung des Brennstoffausnutzungsgrades bis auf 90% bei Kraft-Wärme-Kopplung.

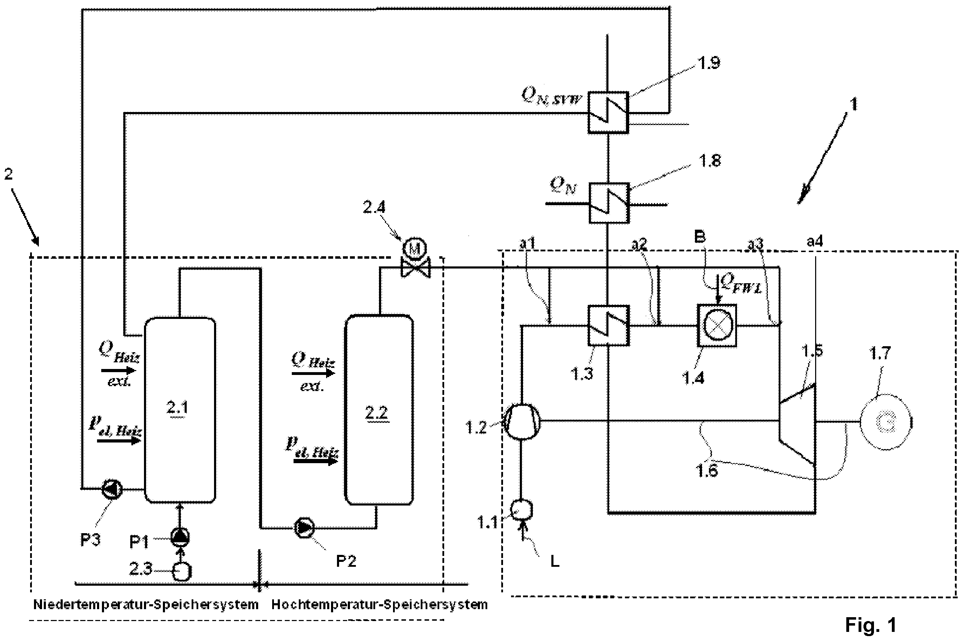

Die Erfindung wird nachfolgend an einem Ausführungsbeispiel und zugehöriger Zeichnung (Fig. 1) näher erläutert.

In der Darstellung wird die Prinzipskizze eines Gasturbinenkraftwerkes 1 gezeigt, welches gestrichelt umrandet ist. Dieses weist einen Ansaugstutzen 1.1 zum Ansaugen von Umgebungsluft auf, die einem Verdichter 1.2 zugeführt wird. Aus diesem gelangt die verdichtete Luft L über einen ersten Wärmeübertrager 1.3 zu einer Brennkammer 1.4, welcher flüssiger oder gasförmiger Brennstoff B (z.B. Erdgas) oder ein Brennstoffgemisch zugeführt wird.

Durch die Verbrennung in der Brennkammer wird dem Prozess eine Feuerungswärmeleistung *Q_{FWL}* zugeführt, wodurch eine Druck- und Temperaturerhöhung zu verzeichnen sind. Aus der Brennkammer 1.4 strömt das heiße Gas mit hoher Temperatur und hohem Druck zur Turbine 1.5, treibt diese an und wird entspannt. Die Turbine 1.5 betreibt über eine Welle 1.6 (oder zwei Wellen) den Verdichter 1.2 und zur Stromerzeugung den Generator 1.7. Das entspannte Gas aus der Turbine 1.5 strömt durch den ersten Wärmeübertrager 1.3 und die ebenfalls durch diesen strömende Luft L wird weiter vorgewärmt. Das aus dem ersten Wärmeübertrager 1.3 ausströmende und noch immer heiße Gas gelangt in einen zweiten Wärmeübertrager 1.8, in welchem ein Wärmeübertrag zur Entnahme von Nutzwärme *Q_{N}* erfolgt, die beispielsweise Verbrauchern als Fernwärme zur Verfügung gestellt wird.
Aus dem zweiten Wärmübertrager 1.8 strömt das immer noch heiße Gas in einen dritten Wärmeübertrager 1.9 und wird anschließend an die Umgebung abgegeben.

Außerhalb des Gasturbinenkraftwerkes 1 ist eine Anlage 2 zur Erzeugung von Heißwasser und/oder Dampf vorgesehen, in welcher Wasser bei einem Druck über dem Niveau des Umgebungsdruckes gespeichert wird. Dazu sind hier zwei Speichersysteme vorgesehen, die mit jeweils einem Speicherbehälter versehen sind, der zur Speicherung von Wasser bzw. Dampf vorgesehen ist, wobei in der Darstellung nur die Speicherbehälter angedeutet sind. Das Speichersystem, welches in Form eines Niedertemperatur-Speichersystems ausgebildet ist, und damit der erste Speicherbehälter 2.1 (Niedertemperaturspeicher) übernimmt die Wasservorwärmung. Von diesem aus kann das vorgewärmte Wasser in das Hochtemperatur-Speichersystem geleitet werden, welches einen zweiten Speicherbehälter 2.2 (Hochtemperaturspeicher) aufweist und in dem die Wassernachwärmung erfolgt.
In dem ersten Speicherbehälter 2.1 herrscht dabei ein Druck über dem Umgebungsdruck von 2-10 bar und es werden alle Energien bis 95°C eingekoppelt, so dass eine Temperatur des Wassers bis 95°C erzielt wird. In den zweiten Speicherbehälter 2.2 werden alle Energien über 95°C eingebracht und das Wasser auf eine Temperatur über 95°C bei einem Druck in der Größenordnung von 10 bar oder höher erwärmt, so dass es zumindest teilweise in die Dampfphase übergeht.
Zu dem ersten Wasserbehälter 2.1 führt ein Wasseranschluss 2.3, mit welchem mittels einer ersten Pumpe P1 Wasser nachgespeist werden kann. Zwischen dem ersten Speicherbehälter 2.1 und dem zweiten Speicherbehälter 2.2 ist eine zweite Pumpe P2 vorgesehen, die das vorgewärmte Wasser aus dem ersten Speicherbehälter 2.1 in den zweiten Speicherbehälter 2.2 fördert bzw. den Druck erhöht. Der im zweiten Speicherbehälter 2.2 bereitgestellte Wasserdampf kann unter Druck durch Öffnen des Motorventils 2.4 an einer oder mehreren der nachfolgend aufgeführten Positionen zu der verdichteten Luft bzw. dem Luft-/Brennstoffgemisch oder Rauchgas eingespritzt werden:
- a1 - zwischen Verdichter 1.2 und ersten Wärmeübertrager 1.3,
- a2 - zwischen ersten Wärmeübertrager 1.3 und Brennkammer 1.4,
- a3 - zwischen Brennkammer 1.4 und Turbine 1.5,
- a4 - direkt in die Turbine 1.5.

Dadurch werden die bekannten Vorteile bei Dampf- und Wassereinspritzung erreicht.

Das Wasser im ersten Speicherbehälter 2.1 wird über eine dritte Pumpe P3 durch den dritten Wärmetauscher 1.9 gefördert, dadurch erwärmt und wieder dem ersten Speicherbehälter 2.1 zugeführt. Das Wasser im ersten Speicherbehälter 2.1 wird somit aus der Abwärmeleistung *Q_{N,SVW}* des Gasturbinenkraftwerkes 1 vorgewärmt. Zusätzlich wird das Wasser im ersten Speicherbehälter 2.1 und im zweiten Speicherbehälter 2.2 durch extern erzeugte elektrische Energie *P_{el,,Heiz}* erwärmt. Diese kann beispielsweise aus negativer Regelleistung oder aus elektrischen Überschüssen bereitgestellt werden.

Zusätzlich können externe Wärmequellen *Q_{Heiz,ext}*. zur Energiespeicherung in den Speicherbehältern 2.1 und 2.2 herangezogen werden, wodurch in dem jeweiligen Speicherbehälter 2.1 und/oder 2.1 eine Temperatur und/oder Druckerhöhung zu verzeichnen ist.

Der Wasserverlust (offene Prozessführung), der durch das Einspritzen von Wasserdampf aus dem zweiten Speicherbehälter 2.2 in das Gasturbinenkraftwerk zu verzeichnen ist, wird durch eine Wassernachspeisung im Niedertemperatur-Speicher (erster Speicherbehälter 2.1) über den Wasseranschluss 2.3 ausgeglichen.

Alternativ zu dem beschriebenen Ausführungsbeispiel kann auch nur dem im ersten Speicherbehälter 2.1 oder dem im Speicherbehälter 2.2 befindlichem Speichermedium (Wasser) zu dessen Erwärmung und/oder Druckerhöhung externe Energie zugeführt werden. Dies können wiederum entweder extern erzeugte elektrische Energie *P_{el,,Heiz}* und/oder externe Wärmequellen *Q_{Heiz,ext}* sein.

Mit der erfindungsgemäßen Lösung werden eine Rückgewinnung von Energieüberschüssen und die Nutzung regenerativer Energiequellen in einem Gasturbinenkraftwerk realisiert. Die Prozessführung ist so zu gestalten, dass möglichst viel Elektroenergie und/oder Wärme beim Kraftwerksbetrieb bereitgestellt werden.

## Patentansprüche

1. Anlage zur Erzeugung von Heißwasser und/oder Dampf und für die Speicherung von Wasser in flüssiger und/oder gasförmiger Form zum Einsatz für ein Gasturbinenkraftwerk (1) mit einem Verdichter (1.2) und einer Turbine (1.5), **dadurch gekennzeichnet, dass**
- die Anlage (2) zur Erzeugung von Heißwasser und/oder Dampf wenigsten ein Speichersystem mit zumindest einem zweiten Speicherbehälter (2.2) für die Speicherung des Wassers aufweist, in welchem durch die Zufuhr von Energie das Wasser erwärmt wird,
- mit wenigstens einer ersten externen Energiequelle, die außerhalb des Gasturbinenkraftwerkes (1) und/oder der Anlage (2) angeordnet ist und welche die Energie zur Erwärmung des Wassers im zweiten Speicherbehälter bereitgestellt, ,
- wobei die Energie in den zweiten Speicherbehälter (2.2) bei Temperaturen größer 95 °C einkoppelbar ist und
- der zweite Speicherbehälter (2.2) Heißwasser und/oder Dampf speichert und auf einen Druck in der Größenordnung von 10 bar oder höher ausgelegt ist und
- das in dem zweiten Speicherbehälter (2.2) gespeicherte Heißwasser und/oder der Dampf in einen Fluidstrom zwischen dem Verdichter (1.2) und der Turbine (1.5) und/oder in die Turbine (1.5) des Gasturbinenkraftwerkes einspritzbar ist.

2. Anlage nach Anspruch 1, **dadurch gekennzeichnet, dass** diese wenigstens ein erstes Speichersystem für eine Wasservorwärmung und wenigstens ein zweites Speichersystem für eine Wassernachwärmung aufweist und dass dem ersten Speichersystem und/oder dem zweiten Speichersystem die Energie aus der Abwärme des Gasturbinenkraftwerkes (1) zuführbar ist und dass zusätzlich dem ersten Speichersystem und/oder dem zweiten Speichersystem Energie aus wenigstens einer externen Energiequelle zur Erzeugung von Heißwasser und/oder Dampf zuführbar ist.

3. Anlage nach Anspruch 1 oder 2, **dadurch gekennzeichnet, dass** wenigstens eine der nachfolgend aufgeführten externen Energiequellen einzeln oder in Kombinationen verwendet wird/werden:
- wenigstens eine Einrichtung zur Umwandlung von Elektroenergie in thermische Energie,
- wenigstens eine regenerative Energiequelle,
- eine oder mehrere Abwärmequellen mit niedrigen und/oder hohen Temperaturen,
- anderweitige Quellen mit Wärmeüberschüssen,
- Abgasstrom/-ströme, Abwärme aus industriellen Anlagen.

4. Anlage nach Anspruch 3, **dadurch gekennzeichnet, dass** die Elektroenergie aus negativer Regelleistung bereitgestellt wird.

5. Anlage nach Anspruch 3 oder 4, **dadurch gekennzeichnet, dass** die Elektroenergie aus Stromüberschüssen bereitgestellt wird.

6. Anlage nach einem der Ansprüche 1 bis 5, **dadurch gekennzeichnet, dass** der zweite Speicherbehälter (2.2), der dem zweiten Speichersystem in Form eines Hochtemperatur-Speichersystems zugeordnet ist, als Hochtemperaturspeicher ausgebildet ist und/oder dass die Anlage einen weiteren ersten Speicherbehälter (2.1) aufweist, der dem ersten Speichersystem in Form eines Niedertemperatur-Speichersystems zugeordnet und als Niedertemperaturspeicher ausgebildet ist.

7. Anlage nach einem der Ansprüche 1 bis 6, **dadurch gekennzeichnet, dass** die Einkopplung der Energie in den ersten Speicherbehälter (2.1) bei Temperaturen bis 95 °C erfolgt und der erste Speicherbehälter (2.1) auf einen Druck in der Größenordnung von 2 bis 10 bar ausgelegt ist.

8. Anlage nach einem der Ansprüche 1 bis 7, **dadurch gekennzeichnet, dass** Heißwasser/Dampf aus dem Hochtemperatur-Speichersystem zur Einspritzung in den Fluidstrom zwischen dem Verdichter (1.2) und der Turbine (1.5) und/oder in die Turbine (1.5) des Gasturbinenkraftwerkes (1) verwendet wird und/oder
dass Dampf aus dem Niedertemperatur-Speichersystem zur Unterstützung des Anfahrens der Turbine (1.5) des Gasturbinenkraftwerkes (1) verwendet wird.

9. Verfahren zur Erzeugung von Heißwasser und/oder Dampf und für die Speicherung von Wasser in flüssiger und/oder gasförmiger Form zum Einsatz für ein Gasturbinenkraftwerk (1) mit einem Verdichter (1.2) und einer Turbine (1.5), **dadurch gekennzeichnet, dass**
- eine Anlage (2) zur Erzeugung von Heißwasser und/oder Dampf mit wenigstens einem Speichersystem mit zumindest einem zweiten Speicherbehälter 2.2) für die Speicherung des Wassers vorhanden ist,
- und in dem zweiten Speicherbehälter (2.2) durch die Zufuhr von Energie das Wasser erwärmt wird, wobei die Energie aus wenigstens einer externen Energiequelle bereitgestellt wird, die außerhalb des Gasturbinenkraftwerkes (1) und/oder der Anlage (2) angeordnet ist und
- in den zweiten Speicherbehälter (2.2) alle Energien über 95°C eingebracht werden und das Wasser auf eine Temperatur über 95°C bei einem Druck in der Größenordnung von 10 bar oder höher erwärmt wird, so dass es zumindest teilweise in die Dampfphase übergeht und
- wobei in einem offenen Prozess das aus dem zweiten Speicherbehälter (2.2) zur Verfügung gestellte Heißwasser und/oder der Dampf in einen Fluidstrom zwischen Verdichter (1.2) und Turbine (1.5) und/oder in die Turbine (1.5) des Gasturbinenkraftwerkes (1) eingespritzt wird.

10. Verfahren nach Anspruch 9, **dadurch gekennzeichnet, dass** in der Anlage (2) Wasser bei einem Druck über dem Niveau des Umgebungsdruckes in zwei Speichersystemen gespeichert wird, wobei ein erstes Speichersystem, einen ersten Speicherbehälter (2.1) aufweist, in dem eine Wasservorwärmung erfolgt und von diesem aus das vorgewärmte Wasser in den zweiten Speicherbehälter 2.2 eines zweiten Speichersystems geleitet wird, in dem eine Wassernachwärmung erfolgt,
wobei in dem ersten Speicherbehälter (2.1) ein Druck über dem Umgebungsdruck von 2-10 bar herrscht und alle Energien bis 95°C eingekoppelt werden, so dass eine Temperatur des Wassers bis 95°C erzielt wird.

11. Verfahren nach Anspruch 9 oder 10, **dadurch gekennzeichnet, dass** aus dem zweiten Speicherbehälter (2.2) bereitgestellter Wasserdampf unter Druck an einer oder mehreren der nachfolgend aufgeführten Positionen des Gasturbinenkraftwerkes (1) zu verdichteter Luft oder einem Luft-/ Brennstoffgemisch oder Rauchgas eingespritzt wird
- (a1) - zwischen dem Verdichter (1.2) und einem ersten Wärmeübertrager (1.3),
- (a2) - zwischen dem ersten Wärmeübertrager (1.3) und einer Brennkammer (1.4),
- (a3) - zwischen der Brennkammer (1.4) und der Turbine (1.5),
- (a4) - direkt in die Turbine (1.5).

12. Verfahren nach einem der Ansprüche 9 bis 11, **dadurch gekennzeichnet, dass** der im zweiten Speicherbehälter (2.2) bereitgestellte Wasserdampf unter Druck durch Öffnen eines Motorventils (2.4) eingespritzt wird und dass der Wasserverlust, der durch das Einspritzen von Wasserdampf aus dem zweiten Speicherbehälter (2.2) in das Gasturbinenkraftwerk (1) zu verzeichnen ist, durch eine Wassernachspeisung im Niedertemperatur-Speicher in Form des ersten Speicherbehälters (2.1) über einen Wasseranschluss (2.3) ausgeglichen wird.

## Claims

1. A system for producing hot water and/or steam and for storing water in liquid and/or gaseous form for use for a gas turbine power plant (1) having a compressor (1.2) and a turbine (1.5), **characterised in that**
- the system (2) for producing hot water and/or steam comprises at least one storage system having at least a second storage container (2.2) for storing water, in which the water is heated by supplying energy,
- having at least a first external energy source, which is arranged outside the gas turbine power plant (1) and/or the system (2) and which provides the energy for heating the water in the second storage container,
- wherein the energy in the second storage container (2.2) can be coupled in at temperatures greater than 95°C, and
- the second storage container (2.2) stores hot water and/or steam and is designed for a pressure in the order of 10 bar or above, and
- the hot water and/or the steam stored in the second storage container (2.2) can be injected into a fluid flow between the compressor (1.2) and the turbine (1.5) and/or into the turbine (1.5) of the gas turbine power plant.

2. The system according to claim 1, **characterised in that** it comprises at least a first storage system for pre-heating water and at least a second storage system for post-heating water, and **in that** the energy from the waste heat of the gas turbine power plant (1) can be fed to the first storage system and/or the second storage system, and **in that** energy from at least one external energy source additionally can be fed to the first storage system and/or the second storage system in order to produce hot water and/or steam.

3. The system according to claim 1 or 2, **characterised in that** at least one of the external energy sources listed below is/are used individually or in combinations:
- at least one device for converting electrical energy into thermal energy,
- at least one regenerative energy source,
- one or more waste heat sources with low and/or high temperatures,
- other sources with heat excesses,
- waste gas flow/flows, waste heat from industrial systems.

4. The system according to claim 3, **characterised in that** the electrical energy is provided from negative reserve power.

5. The system according to claim 3 or 4, **characterised in that** the electrical energy is provided from excess electricity.

6. The system according to any one of claims 1 to 5, **characterised in that** the second storage container (2.2), which is associated with the second storage system in the form of a high-temperature storage system, is formed as a high-temperature store, and/or **in that** the system has a further first storage container (2.1), which is associated with the first storage system in the form of a low-temperature system and which is formed as a low-temperature store.

7. The system according to any one of claims 1 to 6, **characterised in that** the energy is coupled into the first storage container (2.1) at temperatures up to 95°C and the first storage container (2.1) is designed for a pressure in the order of from 2 to 10 bar.

8. The system according to any one of claims 1 to 7, **characterised in that** hot water/steam from the high-temperature storage system is used for injection into the fluid flow between the compressor (1.2) and the turbine (1.5) and/or into the turbine (1.5) of the gas turbine power plant (1), and/or **in that** steam from the low-temperature storage system is used to assist the start-up of the turbine (1.5) of the gas turbine power plant (1).

9. A method for producing hot water and/or steam and for storing water in liquid and/or gaseous form for use for a gas turbine power plant (1) having a compressor (1.2) and a turbine (1.5), **characterised in that**
- a system (2) for producing hot water and/or steam having at least one storage system having at least a second storage container (2.2) for storing water is provided,
- and the water is heated in the second storage container (2.2) by supplying energy, wherein the energy is provided from at least one external energy source, which is arranged outside the gas turbine power plant (1) and/or the system (2), and
- all energies are introduced into the second storage container (2.2) above 95°C and the water is heated to a temperature above 95°C at a pressure in the order of 10 bar or above, so that it transitions at least in part into the steam phase, and
- wherein, in an open process, the hot water and/or the steam provided from the second storage container (2.2) is injected into a fluid flow between the compressor (1.2) and the turbine (1.5) and/or into the turbine (1.5) of the gas turbine power plant (1).

10. The method according to claim 9, **characterised in that** in the system (2) water is stored in two storage systems at a pressure above the level of ambient pressure, wherein a first storage system comprises a first storage container (2.1), in which water is pre-heated and the pre-heated water is conducted herefrom into the second storage container (2.2) of a second storage system, in which water is post-heated,
wherein a pressure, above the ambient pressure, of 2-10 bar prevails in the first storage container (2.1) and all energies are coupled in up to 95°C, so that a temperature of the water up to 95°C is attained.

11. The method according to claim 9 or 10, **characterised in that** steam provided from the second storage container (2.2) is injected under pressure at one or more of the positions of the gas turbine power plant (1) listed below to form compressed air or an air/fuel mixture or flue gas
- (a1) - between the compressor (1.2) and a first heat exchanger (1.3),
- (a2) - between the first heat exchanger (1.3) and a combustion chamber (1.4),
- (a3) - between the combustion chamber (1.4) and the turbine (1.5),
- (a4) - directly into the turbine (1.5).

12. The method according to any one of claims 9 to 11, **characterised in that** the steam provided in the second storage container is injected under pressure by opening a motor valve (2.4), and **in that** the water loss that will be observed as a result of the injection of steam from the second storage container (2.2) into the gas turbine power plant (1) is compensated for by replenishing water in the low-temperature store in the form of the first storage container (2.1) via a water connection (2.3).

## Revendications

1. Installation pour la production d'eau chaude et/ou de vapeur et pour l'accumulation d'eau sous forme liquide et/ou gazeuse en vue de son utilisation dans une génératrice électrique à turbine à gaz (1) avec un compresseur (1.2) et une turbine (1.5), **caractérisée en ce que** :
- l'installation (2) pour la production d'eau chaude et/ou de vapeur comprend au moins un système d'accumulation avec au moins un deuxième réservoir d'accumulation (2.2) pour l'accumulation de l'eau, dans lequel l'eau est chauffée par l'apport d'énergie,
- avec au moins une première source d'énergie externe qui est disposée à l'extérieur de la génératrice électrique à turbine à gaz (1) et/ou de l'installation (2) et qui fournit l'énergie pour le chauffage de l'eau dans le deuxième réservoir d'accumulation,
- l'énergie pouvant être amenée dans le deuxième réservoir d'accumulation (2.2) à une température supérieure à 95 °C et
- le deuxième réservoir d'accumulation (2.2) accumulant de l'eau chaude et/ou de la vapeur et étant dimensionné pour une pression de l'ordre de 10 bars ou davantage, et
- l'eau et/ou la vapeur accumulée dans le deuxième réservoir d'accumulation (2.2) peut être injectée dans un flux de fluide entre le compresseur (1.2) et la turbine (1.5) et/ou dans la turbine (1.5) de la génératrice électrique à turbine à gaz.

2. Installation selon la revendication 1, **caractérisée en ce qu'**elle comporte au moins un premier système d'accumulation pour un préchauffage de l'eau et au moins un deuxième système d'accumulation pour un réchauffage de l'eau et **en ce que** l'énergie provenant de la chaleur dissipée par la génératrice électrique à turbine à gaz (1) peut être amenée au premier système d'accumulation et/ou au deuxième système d'accumulation et **en ce que** l'énergie d'au moins une source d'énergie externe peut être amenée en plus au premier système d'accumulation et/ou au deuxième système d'accumulation afin de produire de l'eau chaude et/ou de la vapeur.

3. Installation selon la revendication 1 ou 2, **caractérisée en ce que** l'une au moins des sources d'énergie externes suivantes est utilisée seule ou en combinaison :
- au moins une installation pour la conversion d'énergie électrique en énergie thermique,
- au moins une source d'énergie à régénération,
- une ou plusieurs sources de chaleur dissipée à basse et/ou haute température,
- d'autres sources de chaleur excédentaire,
- des flux de gaz de combustion, la chaleur dissipée par des installations industrielles.

4. Installation selon la revendication 3, **caractérisée en ce que** l'énergie électrique est fournie par une puissance de régulation négative.

5. Installation selon la revendication 3 ou 4, **caractérisée en ce que** l'énergie électrique est fournie par des excédents de courant.

6. Installation selon l'une des revendications 1 à 5, **caractérisée en ce que** le deuxième réservoir d'accumulation (2.2), qui est associé au deuxième système d'accumulation sous la forme d'un système d'accumulation à haute température, est conformé comme un accumulateur à haute température et/ou **en ce que** l'installation présente un autre premier réservoir d'accumulation (2.1) associé au premier système d'accumulation sous la forme d'un système d'accumulation à basse température et conçu comme un accumulateur à basse température.

7. Installation selon l'une des revendications 1 à 6, **caractérisée en ce que** l'apport de l'énergie dans le premier réservoir d'accumulation (2.1) a lieu à une température de jusqu'à 95 °C et le premier réservoir d'accumulation (2.1) est dimensionné pour une pression de l'ordre de 2 à 10 bars.

8. Installation selon l'une des revendications 1 à 7, **caractérisée en ce que** l'eau chaude ou la vapeur provenant du système d'accumulation à haute température est utilisée pour une injection dans le flux de fluide entre le compresseur (1.2) et la turbine (1.5) et/ou dans la turbine (1.5) de la génératrice électrique à turbine à gaz (1) et/ou
**en ce que** la vapeur provenant du système d'accumulation à basse température est utilisée pour aider au démarrage de la turbine (1.5) de la génératrice électrique à turbine à gaz (1).

9. Procédé pour la production d'eau chaude et/ou de vapeur et pour l'accumulation d'eau sous forme liquide et/ou gazeuse en vue de son utilisation dans une génératrice électrique à turbine à gaz (1) avec un compresseur (1.2) et une turbine (1.5), **caractérisé en ce que** :
- il est prévu une installation (2) pour la production d'eau chaude et/ou de vapeur avec au moins un système d'accumulation muni d'au moins un deuxième réservoir d'accumulation (2.2) pour l'accumulation de l'eau,
- et l'eau est chauffée dans le deuxième réservoir d'accumulation (2.2) par l'apport d'énergie, l'énergie étant fournie par au moins une source d'énergie externe qui est disposée à l'extérieur de la génératrice électrique à turbine à gaz (1) et/ou de l'installation (2) et
- toutes les énergies sont amenées dans le deuxième réservoir d'accumulation (2.2) au-dessus de 95 °C et l'eau est chauffée à une température supérieure à 95 °C sous une pression de l'ordre de 10 bars ou plus, de sorte qu'elle se transforme au moins partiellement en vapeur,
- l'eau chaude et/ou la vapeur fournies par le deuxième réservoir d'accumulation (2.2) étant injectées en circuit ouvert dans un flux de fluide entre le compresseur (1.2) et la turbine (1.5) et/ou dans la turbine (1.5) de la génératrice électrique à turbine à gaz (1).

10. Procédé selon la revendication 9, **caractérisé en ce que** de l'eau est accumulée dans l'installation (2) dans deux systèmes d'accumulation sous une pression supérieure au niveau de la pression ambiante, un premier système d'accumulation présentant un premier réservoir d'accumulation (2.1) dans lequel l'eau est préchauffée et à partir duquel l'eau préchauffée est amenée dans le deuxième réservoir d'accumulation (2.2) d'un deuxième système d'accumulation dans lequel l'eau est réchauffée,
une pression supérieure à la pression ambiante de 2 à 10 bars régnant dans le premier réservoir d'accumulation (2.1) et toutes les énergies étant amenées à une température de jusqu'à 95 °C, de sorte qu'une température de l'eau de jusqu'à 95 °C est atteinte.

11. Procédé selon la revendication 9 ou 10, **caractérisé en ce que** de la vapeur d'eau produite dans le deuxième réservoir d'accumulation (2.2) est injectée sous pression dans une ou plusieurs des positions suivantes de la génératrice électrique à turbine à gaz (1) dans de l'air comprimé ou un mélange d'air et de combustible ou du gaz de combustion :
- (a1) - entre le compresseur (1.2) et un premier échangeur de chaleur (1.3),
- (a2) - entre le premier échangeur de chaleur (1.3) et une chambre de combustion (1.4),
- (a3) -entre la chambre de combustion (1.4) et la turbine (1,5),
- (a4) -directement dans la turbine (1.5).

12. Procédé selon l'une des revendications 9 à 11, **caractérisé en ce que** de la vapeur d'eau produite dans le deuxième réservoir d'accumulation (2.2) est injectée sous pression par l'ouverture d'une vanne à moteur (2.4) et **en ce que** la déperdition d'eau résultant de l'injection de vapeur d'eau du deuxième réservoir d'accumulation (2.2) dans la génératrice électrique à turbine à gaz (1) est compensée par un apport d'eau d'appoint dans l'accumulateur à basse température du premier réservoir d'accumulation (2.1) via un raccord d'arrivée d'eau (2.3).
